# EUROPÄISCHE PATENTSCHRIFT

(11) **EP 0 511 191 B1**
(45) Veröffentlichungstag und Bekanntmachung des Hinweises auf die Patenterteilung: **13.12.1995**
(21) Anmeldenummer: 92890070.3
(22) Anmeldetag: 25.03.1992
(51) Int. Cl.: G01B 11/14, G01B 11/02, E01B 35/00, G01B 11/26

(54) **Einrichtung zum Messen der Lage eines Gleises zu einem Fixpunkt**
System to measure the position of a rail track with respect to a fixed point
Système pour mesurer la position d'une voie ferroviaire envers un point fixe

(30) Priorität: 24.04.1991 AT 854/91
(43) Veröffentlichungstag der Anmeldung: 28.10.1992
(73) Patentinhaber: Franz Plasser Bahnbaumaschinen- Industriegesellschaft m.b.H., 1010 Wien (AT)
(72) Erfinder: Theurer, Josef, Ing., A-1010 Wien (AT); Lichtberger, Bernhard, Dipl.-Ing., A-4060 Leonding (AT)

(56) Entgegenhaltungen:
- EP-A- 0 213 253
- WO-A-89/07688
- DD-A- 212 545
- DE-A- 3 028 419
- GB-A- 2 093 308

## Beschreibung

Die Erfindung betrifft eine Einrichtung zur Ermittlung der Lage eines durch Spurkranzrollen eines Trägerrahmens begrenzten Gleisabschnittes in bezug auf einen durch einen Gleisplan definierten Fixpunkt mit einer drehbar am Trägerrahmen gelagerten Distanzmeßvorrichtung.

Durch die EP 0 213 253 A1 ist bereits eine Gleisstopfmaschine mit einem auf Spurkranzrollen verfahrbaren Vorwagen bekannt, der einen um eine vertikale und horizontale Achse verschwenkbaren Laser-Sender aufweist. Dieser ist mit Hilfe von Spindelantrieben höhen- und seitenmäßig in bezug auf den Vorwagen verstellbar gelagert und zusätzlich zur Abstimmung auf ein maschineneigenes Bezugsystem der Stopfmaschine auch zur Messung der Distanz zu einem seitlich neben dem Gleis befindlichen Fixpunkt ausgebildet. Allerdings muß vor der Einleitung der Distanzmessung der Laser-Sender mit Hilfe der erwähnten Spindelantriebe erst in eine erforderliche Ausgangsposition eingestellt werden.

Durch die WO 89/07688 ist eine Vorrichtung und eine Verfahren zur Bestimmung der Position eines Gleises bekannt. Dazu wird in Arbeitsrichtung von einer Gleiskorrekturmaschine eine Meßeinrichtung auf dem Gleis verfahren. Diese ist mit einer Distanzmeßeinrichtung und einem Laser-Sender ausgestattet, dem Sensoren zur Erfassung eines vertikalen und horizontalen Drehwinkels zugeordnet sind. Wenn die absolute Lage des Gleises im Bereich der Meßeinrichtung bekannt ist, dann ist auch die Lage des Laser-Senders bekannt. Ist die Lage des Gleises jedoch nicht bekannt, dann kann die Lage des Laser-Senders bestimmt werden, indem dieser auf einen neben dem Gleis befindlichen Punkt ausgerichtet wird, dessen Lage bekannt ist. Dabei erfolgt eine Messung des Abstandes und der Richtung in den Koordinaten des genannten Punktes, wodurch die Lage des Laser-Senders in bezug auf den Punkt bestimmbar ist.

Die Aufgabe der vorliegenden Erfindung liegt nun in der Schaffung einer Einrichtung der eingangs beschriebenen Art zum Messen der Distanz zwischen einem Gleis und einem Fixpunkt, mit welcher die Messung unter Vermeidung von aufwendigen Einstellarbeiten rasch und einfach durchführbar ist.

Diese Aufgabe wird erfindungsgemäß durch folgende Merkmale gelöst:
a) wenigstens zwei der Distanzmeßvorrichtung zugeordnete Winkelmesser zur Erfassung eines Drehwinkels (α) bezüglich einer etwa senkrecht zur Gleisebene verlaufenden Achse und eines weiteren Drehwinkels (β) bezüglich einer etwa parallel zur Gleisebene verlaufenden Achse,
b) eine Recheneinheit zur automatischen Ermittlung der Lagedifferenz zwischen der Gleis-Ist-Lage und einer definierten Soll-Lage,
c) ein Präzisionspondel zur Erfassung der in Gleislängsrichtung verlaufenden Abweichung des Trägerrahmens bzw. der Distanzmeßvorrichtung von einer horizontalen Ebene,
d) ein Präzisionspendel zur Erfassung der in Gleisquerrichtung verlaufenden Abweichung des Trägerrahmens bzw. der Distanzmeßvorrichtung von der horizontalen Ebene,
e) eine Anpreßvorrichtung zum Anpressen der an einer Längsseite des Trägerrahmens befindlichen Spurkranzrollen an die Innenkante einer Schiene des Gleises.

Eine derartige Ausbildung ermöglicht eine vereinfachte und genaue Distanzbestimmung zwischen der Einrichtung bzw. der Gleisachse und dem Fixpunkt, wobei sich zeitaufwendige und die Genauigkeit durch eventuelle Bedienungsfehler beeinträchtigende Einstellungen der Distanzmeßvorrichtung in bezug auf das Gleis zur Gänze erübrigen. Mit Hilfe der Winkelmesser und der automatischen Berücksichtigung der Winkelwerte durch die Recheneinheit ist damit der Meßvorgang im wesentlichen auf das Einvisieren der Distanzmeßvorrichtung auf den Fixpunkt reduziert, so daß die Meßdurchführung problemlos auch von weniger speziell geschulten Arbeitskräften mit großer Genauigkeit durchführbar ist. Zweckmäßigerweise sind die ermittelten Distanzwerte auch durch die Recheneinheit abspeicherbar und/oder als Protokoll ausdruckbar, so daß auch bezüglich einer Datenweitergabe an die Bedienungskräfte beispielsweise einer Stopfmaschine, keine Übertragungsfehler auftreten können.

Durch den Einsatz der beiden Präzisionspendel besteht die vorteilhafte Möglichkeit, eine durch eine fehlerhatte Gleislage bedingte Fehllage des Trägerrahmens bei der Meßwertermittlung zur Erzielung genauester Meßergebnisse zu berücksichtigen.

Durch die Verwendung von elektronischen Absolut-Encoder als Winkelmesser sind die gemessenen Winkel in vorteilhafter Weise mit hoher Auflösung und Genauigkeit an die Recheneinheit weiterleitbar.

Mit der Ausbildung der Distanzmeßvorrichtung als kombinierter Laser-Sender und Empfänger ist ein hohes Maß an Genauigkeit bei einfacher Bedienbarkeit erzielbar.

Für den Fall, daß der mit den Winkelmessern verbundenen Distanzmeßvorrichtung eine Video-Kamera zugeordnet ist, besteht die vorteilhafte Möglichkeit, den gesamten Einstellvorgang des Laser-Senders auf den Fixpunkt im Rahmen einer Fernbedienung durchzuführen.

Eine zweckmäßige Alternative zum Einsatz eines Laser-Senders als Distanzmeßvorrichtung ist die in Anspruch 6 angeführte Weiterbildung der Einrichtung, wobei das Seilzug-Potentiometer auch bei schlechten Witterungsverhältnissen einsetzbar ist.

Eine vorteilhafte Weiterbildung der Einrichtung besteht auch darin, daß der Distanzmeßvorrichtung fernsteuerbare Verschwenkantriebe und dem Trägerrahmen ein fernsteuerbarer Fahrantrieb zugeordnet sind. Damit besteht die Möglichkeit, die gesamte Einrichtung ferngesteuert zu verfahren und auch die Einstellarbeiten ferngesteuert durchzuführen.

Schließlich ist mit einer Weiterbildung nach Anspruch 8 die Einrichtung auch in Verbindung mit einer beispielsweise als Mannschaftswagen oder einem Motorturmwagen ausgebildeten Maschine einsetzbar.

Im folgenden wird die Erfindung anhand in der Zeichnung dargestellter Ausführungsbeispiele näher beschrieben.

Es zeigen:
Fig. 1 eine Ansicht einer erfindungsgemäß ausgebildeten Einrichtung zum Messen der Distanz zwischen einem Gleis und einem Fixpunkt,
Fig. 2 eine Draufsicht auf die Einrichtung,
Fig. 3 ein weiteres Ausführungsbeispiuel einer Einrichtung zum Messen der Distanz zwischen Gleis und Fixpunkt und
Fig. 4 ein weiteres Ausführungsbeispiel einer schematischen Seitenansicht einer Maschine mit einer Einrichtung zum Fixpunktmessen.

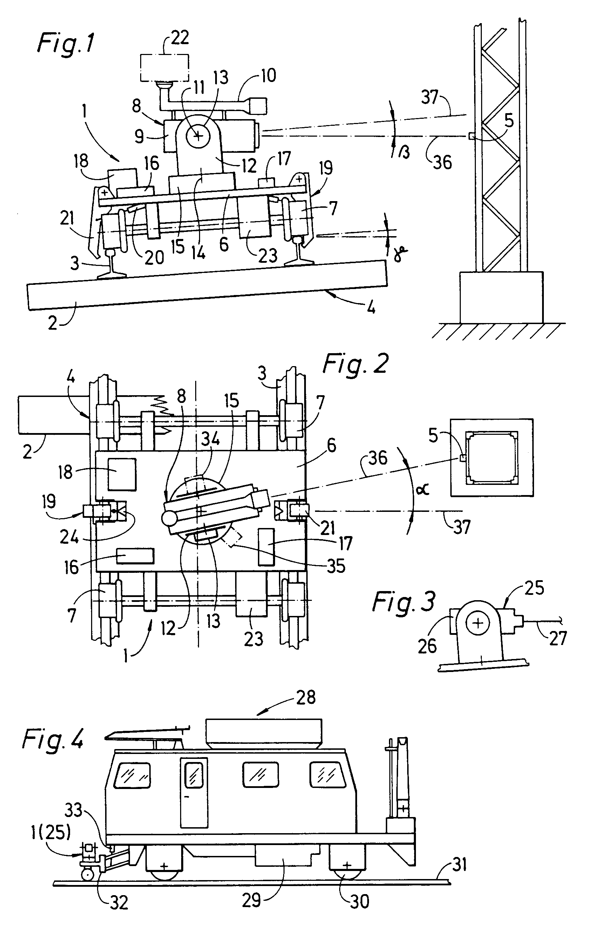

Wie in Fig. 1 ersichtlich, besteht die Einrichtung 1 zum Messen der Distanz zwischen einem aus Schwellen 2 und Schienen 3 gebildeten Gleis 4 und einem seitlich davon angeordneten Fixpunkt 5 bzw. Gleisfestpunkt aus einem Trägerrahmen 6, der durch Spurkranzrollen 7 verfahrbar ist. Der Trägerrahmen 6 ist mittig mit einer Distanzmeßvorrichtung 8 drehbar verbunden. Diese ist als kombinierter Laser-Sender und Empfänger 9 mit einem Zielfernrohr 10 ausgebildet. Zur Verschwenkung um eine etwa parallel zur Gleisebene verlaufende Achse 11 ist der Laser-Sender und Empfänger 9 auf einer Konsole 12 gelagert und mit einem als elektronischer Absolut-Encoder ausgebildeten Winkelmesser 13 verbunden. Die Konsole 12 selbst ist um eine senkrecht zur Ebene des Trägerrahmens 6 bzw. zur Gleisebene verlaufende Achse 14 drehbar gelagert und ebenfalls mit einem als elektronischer Absolut-Encoder ausgebildeten Winkelmesser 15 verbunden. Die beiden Achsen 11 und 14 stehen genau senkrecht zueinander, wobei sich die senkrecht zur Gleisebene verlaufende Achse 14 in der Gleisachse befindet. Die beiden Winkelmesser 13 und 15 sowie zwei Präzisionspendel 16,17 stehen mit einer Recheneinheit 18 in Verbindung. Das Präzisionspendel 17 ist zur Erfassung der in Gleislängsrichtung verlaufenden Abweichung des Trägerrahmens 6 von einer horizontalen Ebene ausgebildet. Das zweite Präzisionspendel 16 dient hingegen zur Erfassung der in Gleisquerrichtung verlaufenden Abweichung des Trägerrahmens bzw. der Distanzmeßvorrichtung 8 von einer horizontalen Ebene zur Erfassung der Gleisquerneigung (Winkel γ).

Wie in Fig. 1 und 2 ersichtlich, ist an beiden Längsseiten des Trägerrahmens 6 jeweils eine Anpreßvorrichtung 19 zum Anpressen von Spurkränzen der Spurkranzrollen 7 an die Innenkante der entsprechenden Schiene 3 vorgesehen. Diese Anpreßvorrichtung 19 ist beispielsweise als durch einen Antrieb 20 um eine in Gleislängsrichtung verlaufende Achse verschwenkbarer Hebel 21 ausgebildet. Mit 22 ist in Fig. 1 die Möglichkeit einer Anordnung einer Videokamera am Okular des Zielfernrohres 10 angedeutet, so daß das Anvisieren des Laser-Senders 9 auf den Fixpunkt 5 auch örtlich distanziert durchführbar ist. Ein beispielsweise als Elektromotor ausgebildeter, fernsteuerbarer Fahrantrieb 23 dient zum Verfahren der Einrichtung 1 am Gleis 4. Mit 34 und 35 (Fig.2) sind fernsteuerbare Antriebe zum Verschwenken des Laser-Senders 9 um die Achsen 11 und 14 angedeutet.

Zur Durchführung des Meßvorganges wird die Einrichtung 1 mit Hilfe des Fahrantriebes 23 so lange auf dem Gleis 4 verfahren, bis eine auf dem Trägerrahmen 6 befindliche Markierung 24 deckungsgleich mit einer auf dem Schienenfuß befindlichen Farbmarkierung zu liegen kommt. Diese Farbmarkierung kennzeichnet die entsprechende Fixpunktosition am Gleis 4. Durch Beaufschlagung des entsprechenden Antriebes 20 erfolgt ein Anpressen der dem Fixpunkt 5 zugekehrten Spurkranzrollen 7 an die entsprechende Schiene 3 zur Ausschaltung des Spurspiels. Anschließend wird der Laser-Sender und Empfänger 9 mit Hilfe des Zielfernrohres 10 auf den Fixpunkt 5 anvisiert. Dabei befindet sich der Laser-Sender 9 auf Grund der fehlerhaften Gleislage im Bereich des Trägerrahmens 6 - und damit auch der auf den Fixpunkt 5 eingerichtete und mit 36 bezeichnete Meßstrahl - nicht in der definierten und mit 37 bezeichneten Soll-Lage gemäß dem Gleisplan. Es wird daher mit der Erfassung der Distanz zwischen dem Laser-Sender 9 und dem Fixpunkt 5 lediglich ein Zwischenmeßwert ermittelt. Die beiden Winkelmesser 13 und 15 sind so eingestellt, daß sie für den Fall, daß sich der Meßstrahl genau in der im Gleisplan definierten Soll-Lage befindet, den Wert Null anzeigen. In Verbindung mit dem beispielhaft beschriebenen Meßvorgang wird im folgenden über die durch die Winkelmesser 13 und 15 eruierten Winkelabweichungen in Verbindung mit den durch die beiden Präzisionspendel 16,17 ermittelten Neigungsabweichungen α und β sowie der als Hilfswert ermittelten Distanz zwischen Laser-Sender und Fixpunkt der exakte Abstand der Gleisachse vom Fixpunkt 5 in der definierten Soll-Lage des Meßstrahls errechnet. Der auf diese Weise exakt ermittelte Abstand zwischen der Distanzmeßvorrichtung 8 und dem Fixpunkt 5 wird wahlweise digital angezeigt und/oder gespeichert bzw. auch als Protokoll ausgedruckt. Bei ferngesteuertem Betrieb besteht natürlich auch die Möglichkeit, die Meßergebnisse direkt an einen Fremdrechner zu übertragen.

Wie bereits erwähnt, ist die Einrichtung 1 derart eingestellt, daß bei einem senkrecht zur Gleisachse sowie parallel zur Ebene des Trägerrahmens 6 bzw. zur Gleisebene verlaufenden, in der Soll-Lage befindlichen Laser-Strahl die von den beiden Winkelmessern 15 und 13 gemessenen Winkel den Wert Null aufweisen. Das heißt, daß die Länge eines derartigen Laser- bzw. Meßstrahls identisch mit dem im Gleisplan genau definierten Abstand des Fixpunktes 5 von der Gleisachse ist (Es gibt jedoch auch andere, von örtlichen Verhältnissen abhängige Definitionen der Lage des Fixpunktes in bezug auf die Gleisachse. In diesen Fällen muß die Null-Einstellung natürlich entsprechend angepaßt werden).

Eine in Fig. 3 ersichtliche weitere Ausführungsvariante einer Einrichtung 25 zum Messen der Distanz zwischen Gleis 4 und Fixpunkt 5 weist anstelle eines Laser-Senders ein Seilzugpotentiometer 26 auf. Dieses ist mit einem Seil 27 verbunden, dessen freies Ende für die Messung der Distanz zum Fixpunkt aus dem Seilzugpotentiometer 26 gezogen und auf den Fixpunkt gelegt wird. Dabei werden vom Seilzugpotentiometer 26 der Seillänge entsprechende Meßwerte an die Recheneinheit abgegeben. Die weiteren Bauteile der Einrichtung 25 sind identisch mit der Einrichtung 1, so daß von einer näheren Beschreibung Abstand genommen wird.

Ein in Fig. 4 schematisch dargestellter Motorturmwagen 28 ist mit Hilfe eines Fahrantriebes 29 durch Schienenfahrwerke 30 auf einem Gleis 31 verfahrbar. An einer Stirnseite des Motorturmwagens 28 ist ein Trägerrahmen 32 mit Spurkranzrollen durch einen Antrieb 33 höhenverstellbar mit einem Maschinenrahmen verbunden. Der Trägerrahmen 32 ist mit einer zuvor beschriebenen Einrichtung 1 bzw. 25 zum Messen der Distanz zwischen Gleis 31 und einem Fixpunkt ausgerüstet.

## Patentansprüche

1. Einrichtung zur Ermittlung der Lage eines durch Spurkranzrollen (7) eines Trägerrahmens (6) begrenzten Gleisabschnittes in bezug auf einen durch einen Gleisplan definierten Fixpunkt (5) mit einer drehbar am Trägerrahmen (6) gelagerten Distanzmeßvorrichtung (8), mit folgenden Merkmalen:
wenigstens zwei der Distanzmeßvorrichtung (8) zugeordnete Winkelmesser (13,15) zur Erfassung eines Drehwinkels (α) bezüglich einer etwa senkrecht zur Gleisebene verlaufenden Achse (14) und eines weiteren Drehwinkels (β) bezüglich einer etwa parallel zur Gleisebene verlaufenden Achse (11),
eine Recheneinheit (18) zur automatischen Ermittlung der Lagedifferenz zwischen der Gleis-Ist-Lage und einer definierten Soll-Lage, gekennzeichnet durch folgende Merkmale:
ein Präzisionspendel (17) zur Erfassung der in Gleislängsrichtung verlaufenden Abweichung des Trägerrahmens (6) bzw. der Distanzmeßvorrichtung (8) von einer horizontalen Ebene,
ein Präzisionspendel (16) zur Erfassung der in Gleisquerrichtung verlaufenden Abweichung des Trägerrahmens (6) bzw. der Distanzmeßvorrichtung (8) von der horizontalen Ebene,
eine Anpreßvorrichtung (19) zum Anpressen der an einer Längsseite des Trägerrahmens (6) befindlichen Spurkranzrollen (7) an die Innenkante einer Schiene (3) des Gleises (4).

2. Einrichtung nach Anspruch 1, dadurch gekennzeichnet, daß die Winkelmesser (13,15) als elektronische Absolut-Encoder ausgebildet sind.

3. Einrichtung nach Anspruch 1 oder 2, dadurch gekennzeichnet, daß die Distanzmeßvorrichtung (8) als kombinierter Laser-Sender und -Empfänger (9) ausgebildet ist.

4. Einrichtung nach einem der Ansprüche 1 bis 3, dadurch gekennzeichnet, daß der mit den Winkelmessern (13,15) verbundenen Distanzmeßvorrichtung (8) eine Videokamera (22) zugeordnet ist.

5. Einrichtung nach Anspruch 1, dadurch gekennzeichnet, daß die Anpreßvorrichtung (19) als durch einen Antrieb (20) um eine in Gleislängsrichtung verlaufende Achse verschwenkbarer Hebel (21) ausgebildet ist.

6. Einrichtung nach Anspruch 1, dadurch gekennzeichnet, daß die Distanzmeßvorrichtung (8) als Seilzugpotentiometer (26) ausgebildet ist, das jeweils um eine etwa senkrecht bzw. parallel zur Gleisebene verlaufende Achse (11,14) verdrehbar gelagert und zur Erfassung des jeweiligen Drehwinkels mit zwei Winkelmessern (13,15) verbunden ist.

7. Einrichtung nach einem der Ansprüche 1 bis 6, dadurch gekennzeichnet, daß der Distanzmeßvorrichtung (8) fernsteuerbare Verschwenkantriebe und dem Trägerrahmen (6) ein fernsteuerbarer Fahrantrieb (23) zugeordnet sind.

8. Einrichtung nach einem der Ansprüche 1 bis 7, dadurch gekennzeichnet, daß der Trägerrahmen (32) durch einen Antrieb (33) höhenverstellbar mit einer gleisverfahrbaren Maschine (28) verbunden ist.

## Claims

1. A system for determining the position of a section of rail track, delimited by flanged rollers (7) of a carrier frame (6), with respect to a fixed point (5) defined by a track chart, comprising a distance measuring means (8) rotatably mounted on the carrier frame (6), having the following features:
at least two angle measuring devices (13,15), associated with the distance measuring means (8), for detecting an angle of rotation (α) with reference to an axis (14) extending approximately perpendicularly to the track plane and a further angle of rotation (β) with reference to an axis (11) extending approximately parallel to the track plane, a computing unit (18) for automatically determining the positional difference between the actual track position and a defined target position, characterized by the following features:
a precision pendulum (17) for detecting the deviation, as seen in the longitudinal direction of the track, of the carrier frame (6) or the distance measuring means (8) from a horizontal plane,
a precision pendulum (16) for detecting the deviation, as seen in the transverse direction of the track, of the carrier frame (6) or the distance measuring means (8) from the horizontal plane,
a contact pressure device (19) for applying with pressure the flanged rollers (7) located on one longitudinal side of the carrier frame (6) to the inner edge of a rail (3) of the track (4).

2. A system according to claim 1, characterized in that the angle measuring devices (13,15) are in the form of electronic absolute encoders.

3. A system according to claim 1 or 2, characterized in that the distance measuring means (8) is in the form of a combined laser transmitter and receiver (9).

4. A system according to any of claims 1 to 3, characterized in that a video camera (22) is associated with the distance measuring means (8) connected to the angle measuring devices (13,15).

5. A system according to claim 1, characterized in that the contact pressure device (19) is designed as a lever (21) pivotable about an axis extending in the longitudinal direction of the track by means of a drive (20).

6. A system according to claim 1, characterized in that the distance measuring means (8) is designed as a cable-operated potentiometer (26) which is mounted for rotation about axes (11,14) extending approximately perpendicular and parallel, respectively, to the track plane, and which is connected to two angle measuring devices (13,15) for detecting the respective angle of rotation.

7. A system according to any of claims 1 to 6, characterized in that remotely controllable pivoting drives are associated with the distance measuring means (8), and a remotely controllable motive drive (23) is associated with the carrier frame (6).

8. A system according to any of claims 1 to 7, characterized in that the carrier frame (32) is connected in vertically displaceable fashion to an on-track machine (28) by means of a drive (33).

## Revendications

1. Installation pour déterminer la position d'un tronçon de voie ferrée délimité par des galets à boudin (7) d'un châssis de support (6) relativement à un point fixe (5) défini par un plan de voie ferrée au moyen d'un dispositif de mesure de la distance (8) monté de façon rotative au châssis de support (6), présentant les caractéristiques suivantes :
au moins deux dispositifs de mesure d'angle (13, 15) associés au dispositif de mesure de la distance (8) pour déterminer un angle de rotation (α) relativement à un axe (14) s'étendant à peu près perpendiculairement au plan de voie ferrée et un autre angle de rotation (β) relativement à un axe (11) s'étendant à peu près parallèlement au plan de voie ferrée,
une unité de calcul (18) pour déterminer automatiquement la différence de position entre la position réelle de voie ferrée et une position de consigne définie, caractérisée par les caractéristiques suivantes :
un pendule de précision (17) pour déterminer l'écart s'étendant dans la direction longitudinale de voie ferrée du châssis de support (6) et, respectivement du dispositif de mesure de la distance (8) relativement à un plan horizontal,
un pendule de précision (16) pour déterminer l'écart s'étendant dans la direction transversale de voie ferrée du châssis de support (6) et, respectivement du dispositif de mesure de la distance (8) relativement au plan horizontal,
un dispositif d'application (19) pour appliquer des galets à boudin (7) se trouvant à un côté longitudinal du châssis de support (6) à l'arête intérieure d'un rail (3) de la voie ferrée (4).

2. Installation selon la revendication 1, caractérisée en ce que les dispositifs de mesure d'angle (13, 15) sont réalisés sous forme de codeur absolu électronique.

3. Installation selon la revendication 1 ou 2, caractérisée en ce que le dispositif de mesure de la distance (8) est réalisé sous forme d'émetteur et de récepteur laser (9) combinés.

4. Installation selon l'une des revendications 1 à 3, caractérisée en ce qu'il est associé au dispositif de mesure de la distance (8) relié aux dispositifs de mesure d'angle (13, 15) une caméra vidéo (22).

5. Installation selon la revendication 1, caractérisée en ce que le dispositif d'application (19) est réalisé sous forme de levier (21) pouvant être pivoté par une commande (20) autour d'un axe s'étendant dans la direction longitudinale de la voie ferrée.

6. Installation selon la revendication 1, caractérisée en ce que le dispositif de mesure de la distance (8) est réalisé sous forme de potentiomètre à câble de traction (26) qui est logé de façon tournante autour d'un axe (11, 14) s'étendant à peu près perpendiculairement et, respectivement parallèlement au plan de voie ferrée et qui est relié pour déterminer l'angle de rotation respectif à deux dispositifs de mesure d'angle (13, 15).

7. Installation selon l'une des revendications 1 à 6, caractérisée en ce que sont associés au dispositif de mesure de la distance (8) des commandes de pivotement pouvant être commandées à distance et au châssis de support (6) un dispositif de locomotion (23) pouvant être commandé à distance.

8. Installation selon l'une des revendications 1 à 7, caractérisée en ce que le châssis de support (32) est relié par une commande (33) de façon réglable en hauteur à une machine (28) déplaçable sur la voie ferrée.
